# FASCICULE DE BREVET EUROPEEN

(11) **EP 0 865 733 B1**
(45) Date de publication et mention de la délivrance du brevet: **25.09.2002**
(21) Numéro de dépôt: 98460005.6
(22) Date de dépôt: 18.03.1998
(51) Int. Cl.: A22C 17/00

(54) **Procédé de fabrication de brochettes et machines pour sa mise en oeuvre**
Verfahren und Vorrichtung zur Herstellung von Spiessen
Method and device for making skewered products

(30) Priorité: 20.03.1997 FR 9703649
(43) Date de publication de la demande: 23.09.1998
(73) Titulaire: NIJAL (S.A.), F-56150 Baud (FR)
(72) Inventeur: Le Paih, Jacques, 56930 Plumeliau (FR)
(74) Mandataire: Bentz, Jean-Paul

(56) Documents cités:
- WO-A-92/08359
- WO-A-96/11579
- DE-A- 1 632 116
- FR-A- 2 642 939

## Description

La présente invention concerne la fabrication de brochettes de viande et/ou poisson et/ou légumes. Une telle fabrication est connue par WO-92/08359.

La production industrielle de brochettes est actuellement en pleine croissance. Elle est assurée au moyen de machines qui ont toutes en commun de mettre en oeuvre des bacs parallélépipédiques de contenance réduite (soit au maximum l'équivalent de cent brochettes) destinés à être remplis par couches successives des produits alimentaires constitutifs des brochettes. Les bacs ont leur fond et leur couvercle percés de trous permettant la traversée de leur contenu par des broches consistant généralement en des piques ou bâtonnets en bois, et des faces latérales présentant chacune une pluralité de fentes parallèles pour le passage de lames de coupe parallèlement aux broches. Les bacs préalablement remplis sont introduits dans la machine qui comporte des moyens pour effectuer automatiquement l'embrochement de leur contenu, puis deux coupes orthogonales à travers lesdites fentes dans les parois latérales et entre les broches. Il est ainsi formé un ensemble de brochettes qui sont séparées les unes des autres lors du vidage des bacs.

S'il existe actuellement des machines satisfaisantes quant à leur fiabilité et leur rendement, un certain nombre d'inconvénients demeurent malgré tout, qui sont liés à l'utilisation de bacs.

Tout d'abord, leur nombre par machine doit être relativement conséquent pour ne pas affecter les cadences. Il s'ensuit directement des contraintes de coût pour leur achat, leur maintenance et leur renouvellement, ainsi que des contraintes, également lourdes, de nettoyage. D'autre part, leur remplissage reste strictement manuel et demande à être réalisé avec soin dans les quatre coins. Et malgré cela, il arrive en pratique très souvent que les brochettes issues de ces coins ne sont pas aux normes d'acceptabilité et sont donc écartées en tant que déchets en des proportions non négligeables.

L'invention résulte notamment d'une recherche de solution à ce problème inhérent à l'utilisation de bacs.

Elle comprend à cet effet un procédé de fabrication de brochettes, caractérisé en ce qu'il comporte les phases de former une veine de produits à embrocher de section carrée ou rectangulaire prédéterminée, de réaliser un embrochement par tranches de ladite veine, et d'opérer des coupes de séparation desdites tranches et des coupes de chaque tranche entre les passages de piques d'embrochement.

Le terme "veine" signifie ici un assemblage de produit(s) à embrocher sous la forme d'un fil ou cordon continu.

Les opérations d'embrochement et de coupe peuvent se succéder de différentes façons. Par exemple, l'embrochement peut avoir lieu d'abord, avant les deux coupes. De préférence cependant, la veine est d'abord coupée en tranches qui sont ensuite embrochées, puis en dernier lieu découpées en brochettes individuelles.

Selon une autre caractéristique de l'invention, ladite veine de produit(s) est réalisée par remplissage d'un couloir de section rectangulaire ou carrée dont au moins le fond est constitué par une bande de convoyeur. En règle générale, la formation de la veine consiste en un empilage de produits sous formes de couches le long dudit couloir.

L'invention concerne également des machines de mise en oeuvre du procédé défini ci-dessus, qui comprend donc, associés à des moyens d'embrochement et de coupe, des moyens de réalisation d'une veine de produit(s) à embrocher.

Ces caractéristiques et avantages de la présente invention, ainsi que d'autres, apparaîtront plus clairement à la lecture de la description suivante, faite en relation avec les dessins joints, dans lesquels :
la Fig. 1 est une vue schématique représentant en plan, dans sa globalité, une machine de fabrication de brochettes selon l'invention ;
la Fig. 2 est une vue frontale selon la direction II-II de la Fig. 1 illustrant la sortie d'un tunnel de formation d'une veine de produit(s) à embrocher constituant l'une des parties essentielles, selon l'invention, de la machine ;
la Fig. 3 est une vue de côté du même tunnel et d'une partie le prolongeant en amont ;
la Fig. 4a est une vue frontale par rapport audit tunnel, selon la même direction II-II, représentant schématiquement des moyens trancheurs rotatifs destinés à agir immédiatement en aval de la sortie dudit tunnel ;
la Fig. 4b est une vue schématique en coupe verticale axiale de ces moyens trancheurs rotatifs ;
la Fig. 5 est une vue schématique en perspective d'un plateau qui constitue un autre élément important de la machine de la Fig. 1 ;
les Figs. 5a, 5b et 5c sont des vues frontales partielles de trois modèles différents du plateau de la Fig. 5, destinés à des formats de brochettes différents ;
la Fig. 6 est une vue schématique de côté d'un dispositif d'embrochement prévu pour équiper la machine de la Fig. 1 ; et
les Figs. 6a à 6d sont des vues schématiques de dessus illustrant le principe de fonctionnement de ce dispositif d'embrochement.

La machine représentée dans les dessins est particulièrement remarquable du fait de procéder dans sa totalité d'une étude basée sur le principe premier de l'invention qui consiste en la formation en continu d'une veine de produit(s) à embrocher de section calibrée afin de s'affranchir radicalement des bacs de forme générale cubique dont l'emploi est à ce jour généralisé de façon absolue dans la fabrication automatique de brochettes.

Cette machine forme donc un tout fonctionnel intégrant un nombre élevé d'innovations techniques qui possèdent chacune un haut degré d'originalité en elles-mêmes, notamment au niveau de la coupe et de l'embrochement, et qui concourent à un but commun d'efficacité, de fiabilité, etc.

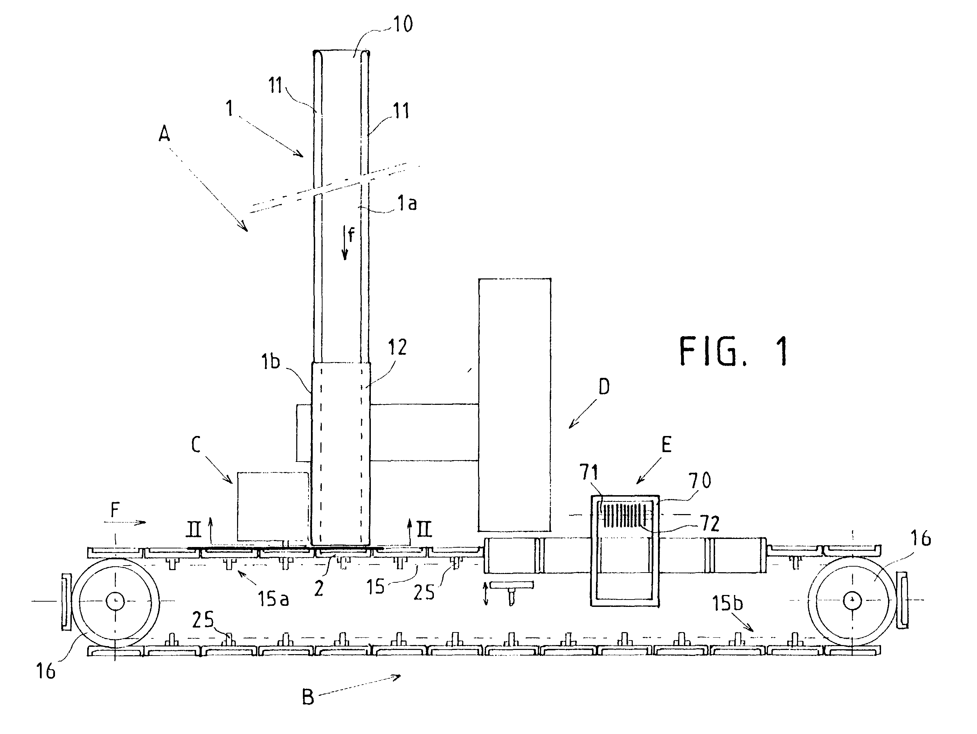

La machine comporte les ensembles ou postes fonctionnels suivants, Fig. 1 :
- un ensemble amont A de formation d'une veine de section calibrée de produit(s) à embrocher ;
- un carrousel de plateaux B, dont les plateaux passent tour à tour devant la sortie de l'ensemble A pour recevoir l'extrémité sortante de la veine ;
- un ensemble de tranchage C pour séparer de la veine l'extrémité sortante de celle-ci reçue dans un plateau et en formant le contenu ;
   et, en considérant le sens de défilement du carrousel B :
- un ensemble d'embrochement D en aval de l'ensemble A sur un même côté du carrousel B, destiné à embrocher en une rangée unique le contenu des plateaux chargés ;
- un ensemble de coupe E en aval de l'ensemble d'embrochement D, destiné à individualiser en brochettes le contenu des bacs embroché au poste D ; et, optionnellement,
- un ensemble non montré d'extraction à partir des bacs et de réception des brochettes individualisées au poste E.

L'ensemble A comprend un couloir 1 de section transversale carrée ou rectangulaire sensiblement uniforme sur l'ensemble de sa longueur. Le couloir 1 est constitué par un convoyeur de base 10 à bande sans fin formant une voie horizontale bordée par des parois verticales 11, lesquelles peuvent également consister en des convoyeurs à bande sans fin ou, en variante, en des panneaux fixes en matériau approprié à faible coefficient de frottement tel que polyéthylène.

Le couloir 1 est ouvert supérieurement dans sa partie amont 1a et se termine en aval par un tronçon recouvert ou tunnel 1b, dont la sortie a des dimensions transversale et verticale correspondant précisément à celles de la veine à former. Comme le montre la Fig. 3, la paroi supérieure du tunnel 1b consiste en le brin inférieur 12a d'une bande sans fin de convoyeur 12, lequel brin inférieur 12a est légèrement descendant vers l'aval sur au moins une certaine longueur à partir de son extrémité amont, pour agir en compression verticale sur la veine V. Dans le même but, les parois latérales 11 pourraient être légèrement convergentes vers la sortie du tunnel 1b.

La partie ouverte 1a du couloir 1 a une longueur suffisante pour admettre dans de bonnes conditions le nombre de postes de remplissage en produit(s) à embrocher pour la formation de la veine V, Fig. 3, généralement par empilage de couches successives. A titre indicatif, il est prévu que la longueur de la partie la soit normalement comprise entre 2 et 4 m.

En fonctionnement, toutes les parties du couloir 1 consistant en des bandes de convoyeur sont commandées pour défiler en parfait synchronisme, à la même vitesse et dans le même sens indiqué par la flèche f, Fig. 1.

Le carrousel de plateaux B comprend une pluralité de plateaux 2 montés sur une chaîne sans fin 15 passant sur deux roues de renvoi 16 dont une est motrice. Le carrousel B présente donc deux brins aller et retour rectilignes et parallèles, dont le brin aller 15a défile à proximité immédiate devant la sortie du tunnel 1b, perpendiculairement à lui.

Les plateaux 2 sont fixés à la chaîne 15 par l'intermédiaire d'une articulation 25 au niveau de la face inférieure de leur fond, de telle manière qu'au moyen de plusieurs guides de glissement fixes, non montrés, ils peuvent occuper des positions d'inclinaison diverses entre la verticale et l'horizontale, qui dépendent de leur position le long du carrousel. La Fig. 3 montre ainsi un plateau 2 en position verticale devant la sortie de l'ensemble A. Comme on peut le voir sur le dessin, l'articulation 25 du plateau 2 est de préférence légèrement décalée vers le haut par rapport à une position à mi-hauteur. D'autre part, l'articulation 25 est avantageusement d'un type à démontage rapide, pour faciliter le remplacement des plateaux 2 dans le carrousel.

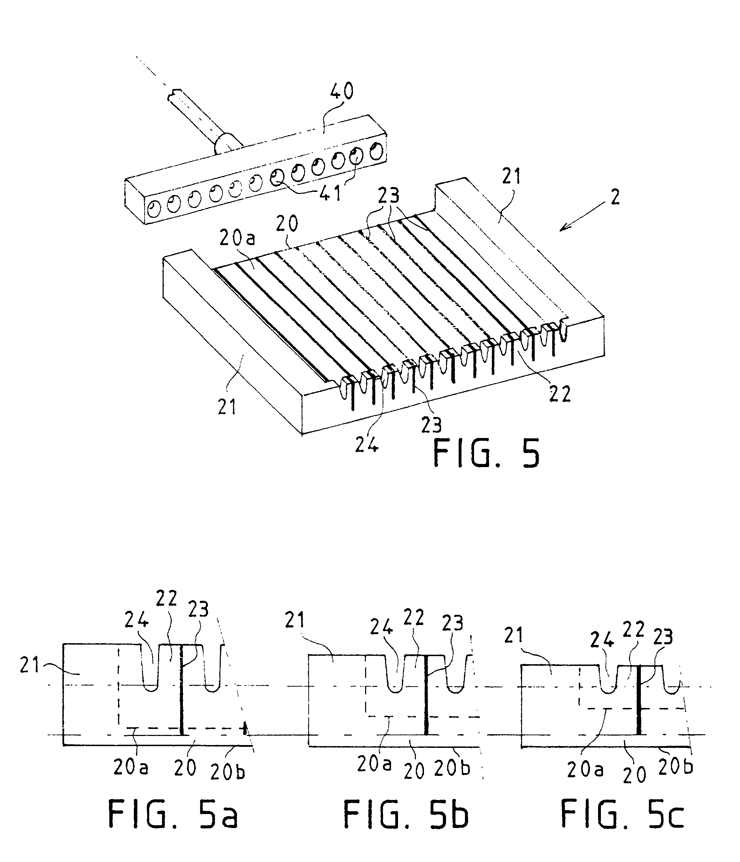

Un plateau 2 est montré à la Fig. 5. Il comprend un fond rectangulaire 20, deux bordures latérales 21 et une bordure frontale 22. Le plateau est ouvert à l'arrière, la Fig. 5 illustrant en outre un moyen 40 qui sera décrit dans la suite, dont la fonction est de venir constituer une bordure arrière dans le plateau dans des conditions bien précises.

Le fond du plateau 2 présente d'avant en arrière une pluralité de rainures parallèles et équidistantes 23, destinées au passage de disques de coupe, qui sont débouchantes à leurs deux extrémités, en se prolongeant donc à l'avant dans la bordure frontale 22. De part et d'autre des rainures 23, la bordure frontale 22 présente des encoches 24 dont le fond forme le passage pour des piques d'embrochement à mi-hauteur de la bordure, par rapport à la surface supérieure 20a du fond du plateau. Comme représenté, les encoches 24 sont de préférence légèrement évasées vers le haut.

Les Figs. 5a à 5c illustrent trois plateaux différents entre eux par leur profondeur, pour la fabrication de brochettes de différents formats. Selon une caractéristique de l'invention, le fond des encoches 24, à mi-hauteur de la bordure 22 par rapport à la face supérieure 20a du fond 20, se trouve également à une même distance dans les trois cas de la face inférieure 20b du fond 20, dans le but d'éviter au maximum des réglages lors des changements de fabrication. De même, dans les trois cas, le fond des rainures 23 est à une même distance de la face inférieure 20b du fond 20.

L'ensemble de tranchage C est installé sur le côté amont du tunnel 1b (considérant le sens de défilement F du carrousel B, Fig. 1).

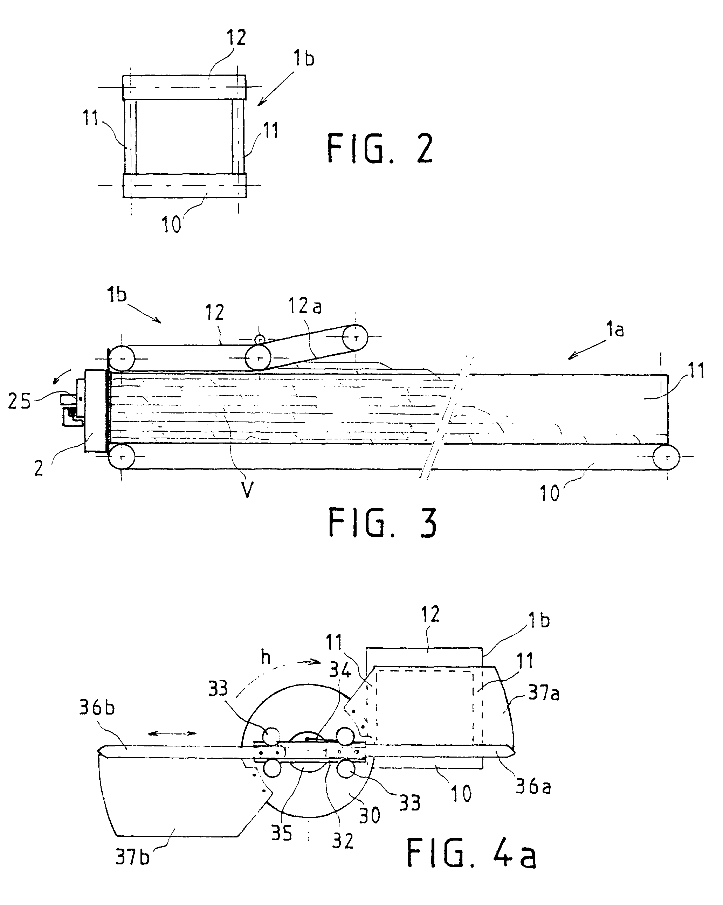

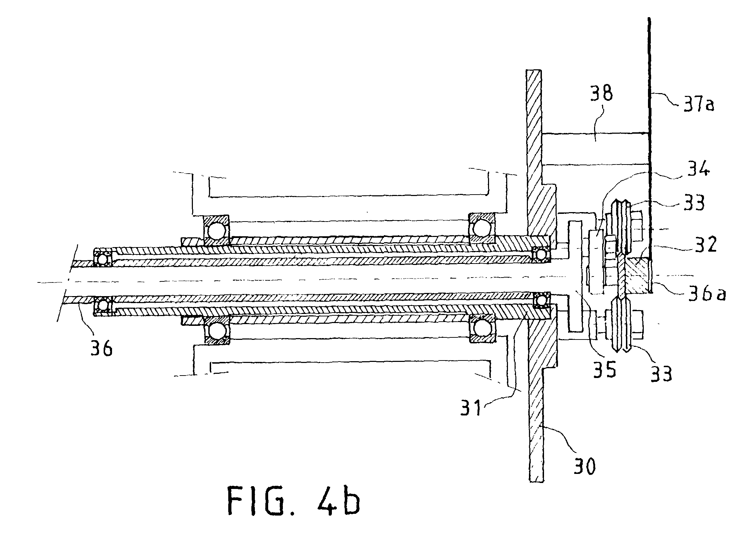

L'ensemble C comprend un volant 30 , Figs. 4a et 4b, solidaire d'un arbre d'entraînement 31 parallèle au couloir 1, qui tourne dans le sens horaire h. Le volant 30 porte à distance, de l'autre côté par rapport à l'arbre 31, un support rectiligne de lames 32 monté avec une aptitude de déplacement en translation selon une direction diamétrale entre des galets de guidage 33. Le support de lames 32 est entraîné selon un mouvement de va-et-vient entre les guides 33 par un mécanisme à excentrique comprenant une biellette 34 et un volant 35 solidaire d'un arbre d'entraînement 36 monté concentriquement à l'intérieur de l'arbre d'entraînement 31 du volant 30, chacun des arbres 31 et 36 étant relié à une motorisation propre, non montrée.

Le support de lames 32 admet un couple de lames allongées 36a, 36b, montées à l'opposé l'une de l'autre pour agir chacune leur tour en descendant devant la sortie du tunnel 1b, Fig. 4a.

Selon l'invention, l'ensemble de tranchage C comprend en outre, associé à chaque lame 36a, 36b, un écran en tôle, respectivement 37a, 37b, fixé au volant 30 par l'intermédiaire de bras de support 38, Fig. 4b, et destiné à suivre la lame lors de son mouvement de descente devant la sortie du tunnel 1b, pour venir obturer cette dernière. Les écrans 37a, 37b sont de préférence engagés par leur bord adjacent dans une rainure prévue sur le dos des lames 36a, 36b.

Ainsi, dans une séquence de fonctionnement de l'ensemble trancheur C, la lame 36b dont ce sera le tour d'opérer, Fig. 4a, aura déjà tourné d'un quart de tour, environ, en vue de la libération par l'écran 37a de la lame 36a de la sortie du tunnel 1b après arrivée en regard de celle-ci d'un plateau vide. Elle va donc effectuer le tranchage en descendant de la position horaire de douze heures, environ, et en oscillant simultanément, jusqu'à la position horaire de trois heures dans laquelle elle va s'arrêter, de telle manière que la sortie du tunnel 1b soit obturée par son écran 37b.

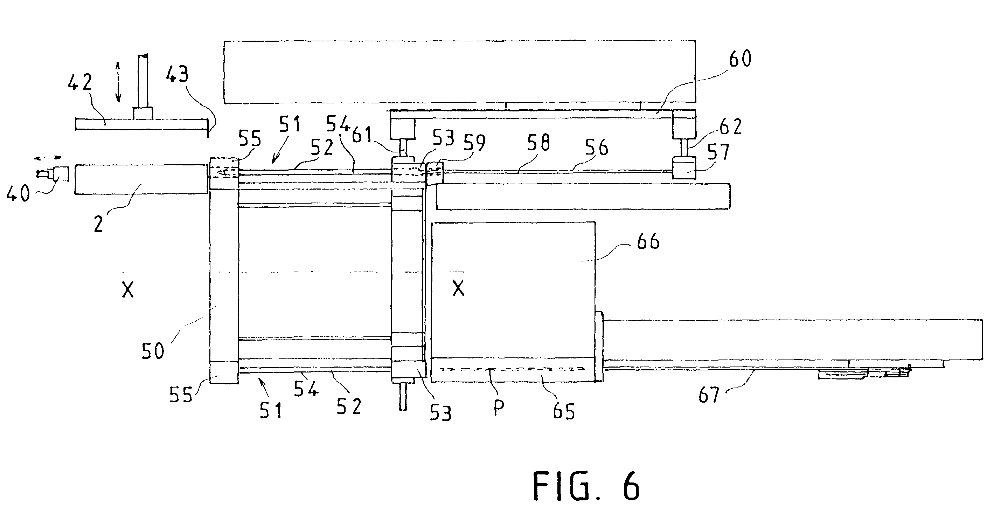

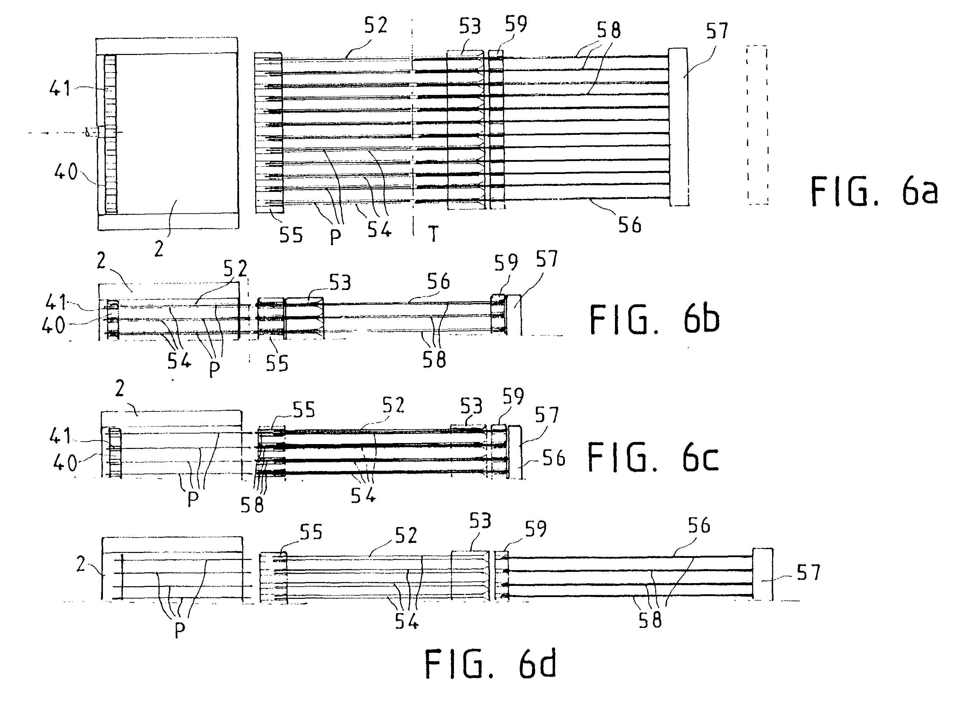

L'ensemble d'embrochement D apparaît aux Figs. 6 et 6a à 6d.

A la Fig. 6, un plateau 2 est représenté en position horizontale au poste d'embrochement. Un poussoir 40, déjà montré à la Fig. 5, a pour fonction de s'engager dans la partie arrière ouverte du plateau 2, actionné par un vérin pneumatique, pour venir en butée contre le contenu du plateau, en formant une bordure arrière. Le poussoir 40 comprend des ouvertures 41, Fig. 5, de préférence évasées, qui correspondent aux fonds des encoches 24 de la partie frontale 22 du plateau 2 pour recevoir les piques d'embrochement. D'autre part, une plaque horizontale supérieure 42, entraînée également de façon pneumatique en translation verticale, est destinée à venir en recouvrement du plateau 2 pour l'opération d'embrochement. La plaque 42 est bordée inférieurement par une bande frontale 43 destinée à descendre devant la bordure frontale 22 du plateau 2. La bande frontale 43 a pour fonction de fermer frontalement la partie haute des encoches 24 du plateau pour n'en laisser libre que le fond sous forme de trous de passage pour l'embrochement.

Le dispositif d'embrochement proprement dit comporte un barillet 50, Fig. 6, qui porte en périphérie quatre ensemble plans identiques 51 disposés à 90° les uns des autres, le barillet 50 étant axé selon X-X, parallèlement à la direction d'embrochement, et disposé de manière à amener tour à tour les ensembles 51 en position haute horizontale définissant le poste d'embrochement.

Chaque ensemble 51 comprend un peigne 52 constitué d'une base 53 et d'une pluralité de tubes 54, correspondant en nombre, en écartement et en position aux fonds des encoches 24 dans la partie frontale 22 du plateau 2. Les tubes 54 sont ouverts à l'avant, et à l'arrière où ils sont prolongés par des trous traversants dans la base 53. Le peigne 52 a une aptitude en coulissement longitudinal dans l'ensemble 51 pour faire sortir les tubes 54 dans la direction d'embrochement, ces derniers passant dans un guide 55 fixé sur le devant du barillet.

Dans le prolongement en arrière de la position au poste d'embrochement des ensembles 51, se trouve un ensemble formé d'un peigne 56 dont la base 57 porte une pluralité de tiges métalliques 58 dans l'alignement des tubes 54 présents au poste d'embrochement. A l'avant, les tiges 58 passent à travers un guide fixe 59 qui se trouve juste derrière la base 53 du peigne 52 au poste d'embrochement lorsque celui-ci est en position de retrait sur le barillet 50. Les tiges 58 sont destinée à rentrer sélectivement dans les tubes 54 qui leur correspondent. Elles ont une longueur qui leur permet, en position totalement avancée, de ressortir légèrement en avant du barillet 50.

Un mécanisme 60 d'entraînement en translation dans les deux sens de la direction d'embrochement est placé au-dessus du peigne 56, lequel peut être sélectivement couplé avec le mécanisme 60 par l'intermédiaire de sa base 57 et d'un moyen d'accouplement 62, de même que le peigne 52 présent au poste d'embrochement par l'intermédiaire de sa base 53 et d'un moyen d'accouplement 61.

Le dispositif d'embrochement comprend également un mécanisme destiné à charger en piques d'embrochement ou piques en bois P les tubes 54 des peignes d'embrochement 52. Le chargement des peignes 52 a lieu lorsqu'ils sont en position horizontale basse dans le barillet 50, définissant un poste de chargement, Fig. 6. Dans cette position, les trous traversants de la base 53 du peigne 52 sont alignés avec les rainures d'un tiroir 65 faisant partie d'un système de chargement en tous points conforme à l'enseignement du brevet français n° 2 642 938, actuellement au nom de la présente demanderesse, et intitulé "Dispositif de distribution et d'espacement automatiques de bâtonnets ou piques pour machines à brochettes" qui est incorporé ici par référence. Le tiroir 65 coopère avec un magasin à piques 66 dont on peut voir à la Fig. 1, qu'il peut se trouver partiellement sous l'ensemble A, et avec un peigne 67 dont la fonction est d'assurer le transfert des piques en bois P du tiroir 65 dans les tubes 54 du peigne 52 présent au poste de chargement.

Les Figs. 6a à 6d illustrent la technique d'embrochement mise en oeuvre par le dispositif qui vient d'être décrit.

En premier lieu, Fig. 6a, le peigne 56 est couplé seul avec le dispositif d'entraînement en translation 60. Par déplacement en avant, les tiges 58 du peigne 56 pénètrent à l'intérieur des tubes 54 du peigne 52 en place au poste d'embrochement, jusqu'au niveau du trait interrompu T, pour y pousser et y positionner les piques en bois P présentes à l'intérieur, de telle manière que l'extrémité avant de ces dernières soit légèrement sortante à l'extrémité des tubes 54.

Ensuite, le peigne 52 est lui aussi couplé au système d'entraînement 60 qui fait ainsi avancer en parfaite simultanéité l'ensemble du peigne 52 et du peigne 56, Fig. 6b. Les tubes 54 progressent donc à travers le contenu du plateau 2 présent au poste d'embrochement avec l'extrémité des piques en bois P qu'ils contiennent légèrement dépassante à leur extrémité avant. Le déplacement en avant se prolonge jusqu'à ce que les tubes 54 s'engagent dans les trous correspondants 41 du poussoir 40 en bout du plateau 2.

Dans l'étape suivante, Fig. 6c, le peigne 56 est désaccouplé d'avec le système d'entraînement 60, de telle sorte qu'il reste immobile en conservant la position atteinte en fin d'embrochement. Le peigne 52, toujours accouplé au système d'entraînement 60, est ramené seul en arrière, les piques en bois P restant immobiles, bloquées contre un éventuel recul par les tiges 58.

Enfin, le peigne 52 est désaccouplé d'avec le système d'entraînement 60 tandis que le peigne 56 est couplé avec lui à nouveau pour être ramené en position de recul maximum. Les tiges 58 sont ainsi totalement à l'extérieur de l'ensemble d'embrochement 51 présent au poste d'embrochement, de telle sorte que le barillet 50 peut effectuer une rotation de 90° pour y amener un nouvel ensemble 51. Dans le même temps, le poussoir 40 a été rétracté pour être extrait du plateau 2 dont le contenu a été embroché, de telle sorte que le plateau 2 peut quitter le poste d'embrochement.

L'ensemble de coupe E est disposé immédiatement à la suite du dispositif d'embrochement, au-dessus du brin de défilement 15a du carrousel de plateau B. Il est destiné à faire une coupe multiple après embrochement dans les plateaux 2, parallèlement à la direction d'embrochement. A cet effet, l'ensemble de coupe comprend, porté sur un cadre rectangulaire 70 disposé transversalement au-dessus du carrousel B, un arbre de coupe rotatif 71 portant une pluralité de disques de coupe 72 destinés à opérer dans le plan vertical des rainures 23 du plateau 2 présent au poste de coupe. Durant la coupe, l'arbre 71 est entraîné simultanément en rotation et en translation le long du cadre 70. Un poussoir, non montré, similaire au poussoir 40 du poste d'embrochement, bloque le contenu du plateau 2 lors de la coupe.

On va maintenant décrire le fonctionnement de la machine dans son ensemble, en suivant le cheminement d'un plateau 2 au départ du brin 15a dans le carrousel B. Le plateau 2 est alors en position verticale, son volume intérieur orienté vers l'extérieur, et sa bordure avant 22 en bas.

C'est ainsi que le plateau 2 va arriver en regard de la sortie du tunnel 1b, par un défilement pas à pas du carrousel B, des moyens, connus en soi et non montrés, étant prévus pour assurer un positionnement précis du plateau 2.

La sortie du tunnel 1b, obturée par l'écran 37 d'une lame de coupe de l'ensemble de tranchage C va alors être dégagée, par rotation d'un quart de tour de ce dernier dans le sens horaire, Fig. 4a.

La veine de produit(s) à embrocher libérée en sortie du tunnel 1b va donc pénétrer dans le plateau 2, en venant en occuper parfaitement toute la surface délimitée par la bordure avant 22 et les bordures latérales 21. Selon les cas, le mouvement de la veine imprimé par celui des convoyeurs du couloir 1 peut être continu ou pas à pas.

Lorsque le plateau 2 est correctement chargé, l'ensemble de tranchage C tourne à nouveau d'un quart de tour pour en individualiser le contenu par rapport à la veine. L'écran 37 de la lame 36 qui a opéré reste en position d'obturation devant la sortie du tunnel 1b. Le plateau 2 chargé avance alors en regard d'une paroi verticale, non montrée, assurant le maintien de son contenu, puis il se redresse en position horizontale pour arriver au poste d'embrochement.

Là, l'embrochement a lieu comme décrit précédemment, suite à quoi le plateau 2 avance horizontalement jusqu'au poste de coupe E où les brochettes sont individualisées, pour être ensuite extraites du plateau et récupérées. Le plateau 2 vidé de son contenu retrouve alors la position verticale avant de passer autour de la roue de renvoi aval du carrousel B. Le long du brin de retour 15b, le plateau 2 peut être soumis à une phase de nettoyage, effectuée par exemple automatiquement dans un tunnel équipé à cet effet.

Il a été décrit précédemment un exemple de réalisation de plateaux 2 sous forme de plusieurs modèles de profondeurs différentes permettant de réaliser différents formats de brochettes. On peut voir maintenant qu'avec ce type de plateaux, pour passer en production d'un format de brochettes à un autre, deux opérations simples suffisent :
- le changement des plateaux 2 dans le carrousel B ; et
- un réglage de la position du couloir 1 et de l'ensemble de tranchage C par rapport au carrousel B ;
tous les autres calages en position ne nécessitant aucune modification.

## Revendications

1. Procédé de fabrication de brochettes de produit(s) alimentaire(s), **caractérisé en ce qu'**il comprend les phases de former une veine (V) de produit(s) à embrocher de section carrée ou rectangulaire prédéterminée, d'opérer des coupes de séparation en tranches de ladite veine et, de réaliser un embrochement desdites tranches, d'opérer de coupes de chaque tranche entre les passages des piques d'embrochement (P), les opérations d'embrochement et de coupe peuvent se succéder de différentes façons.

2. Procédé selon la revendication 1, **caractérisé en ce que** ladite veine (V) est d'abord coupée en tranches qui sont ensuite embrochées, puis en dernier lieu découpées en brochettes individuelles.

3. Procédé selon la revendication 1 ou 2, **caractérisé en ce que** la veine (V) de produit(s) à embrocher est réalisée par remplissage d'un couloir (1) de section rectangulaire ou carrée, dont au moins le fond est constitué par une bande de convoyeur (10).

4. Procédé selon la revendication 3, **caractérisé en ce que** la formation de la veine (V) dans ledit couloir (1) consiste en un empilage de produits sous forme de couches le long dudit couloir (1).

5. Machine pour mettre en oeuvre le procédé selon l'une des revendications 1 à 4, **caractérisée en ce qu'**elle comprend, associés à des moyens d'embrochement et de coupe, des moyens de réalisation d'une veine (V) de produit(s) à embrocher.

6. Machine selon la revendication 5, **caractérisée en ce qu'**elle comprend :
- un ensemble amont (A) de formation d'une veine (V) de section calibrée de produit(s) à embrocher ;
- un carrousel de plateaux (B), dont les plateaux (2) passent tour à tour devant la sortie de l'ensemble (A) pour recevoir l'extrémité sortante de la veine (V) ;
- un ensemble de tranchage (C) pour séparer de la veine (V) l'extrémité sortante de celle-ci reçue dans un plateau (2) et en formant le contenu ;
- un ensemble d'embrochement (D) en aval de l'ensemble (A) sur un même côté du carrousel (B), destiné à embrocher en une rangée unique le contenu des plateaux (2) chargés ; et
- un ensemble de coupe (E) en aval de l'ensemble d'embrochement (D), destiné à individualiser en brochettes le contenu des bacs embrochés au poste (D).

7. Machine selon la revendication 6, **caractérisée en ce que** ledit ensemble de formation d'une veine (V) comprend un couloir (1) de section transversale carrée ou rectangulaire, constitué par un convoyeur de base (10) à bande sans fin formant une voie horizontale bordée par des parois latérales (11), lequel couloir (1) est ouvert supérieurement dans sa partie amont (1a) et se termine en aval par un troncçon recouvert ou tunnel (1b) dont la sortie a des dimensions transversale et verticale correspondant -précisément à celles de la veine (V) à former.

8. Machine selon la revendication 7, **caractérisée en ce que** la paroi supérieure du tunnel (1b) consiste en le brin inférieur (12a) de la bande sans fin d'un convoyeur (12), lequel brin inférieur (12a) est légèrement descendant vers l'aval au moins sur une certaine longueur à partir de son extrémité amont, pour agir en compression verticale sur la veine (V).

9. Machine selon l'une des revendications 6 à 8, **caractérisée en ce que** le carrousel de plateaux (B) comprend une pluralité de plateaux (2) montés sur une chaîne sans fin (15), dont le brin aller (15a) défile à proximité immédiate devant la sortie du tunnel (1b) de l'ensemble (A), les plateaux (2) étant fixés à la chaîne (15) par l'intermédiaire d'une articulation (25), de telle manière qu'au moyen de guides de glissement fixes, ils puissent occuper des positions d'inclinaison diverses entre la verticale et l'horizontale, qui dépendent de leur position dans le carrousel (B).

10. Machine selon l'une des revendications 6 à 9, **caractérisée en ce que** les plateaux (2) comprennent un fond rectangulaire (20) ouvert à l'arrière, deux bordures latérales (21) et une bordure frontale (22), la face supérieure (20a) du fond présentant d'avant en arrière une pluralité de rainures (23) parallèles et équidistantes, destinées au passage de disques de coupe (72), qui sont débouchantes à leur deux extrémités, en se prolongeant à l'avant dans la bordure frontale (22), celle-ci présentant de part et d'autre des fentes (23), des encoches (24) dont le fond forme le passage pour des piques d'embrochement (P).

11. Machine selon la revendication 10, **caractérisée en ce que** sont prévus plusieurs modèles de plateaux (2) en vue de la fabrication de différents formats de brochettes, les modèles variant par leur profondeur mais étant conçus de telle façon que le fond des encoches (24) dans la bordure frontale (22) soit également écarté pour tous les modèles de la face inférieure (20b) de la paroi de fond (20) et que de même, le fond des rainures (23) soit également écarté pour tous les modèles de la face inférieure (20b) de la paroi de fond (20).

12. Machine selon l'une des revendications 6 à 11, **caractérisée en ce que** l'ensemble de tranchage (C) comprend un ensemble de deux lames (36a, 36b) montées en opposition et agissant tour à tour par déplacements simultanés en rotation et en va-et-vient sur elles-mêmes.

13. Machine selon la revendication 12, **caractérisée en ce que** dans l'ensemble de tranchage (C), à chaque lame (36a, 36b) est associé un écran (respectivement 37a, 37b) dont la fonction est d'obturer momentanément la sortie du tunnel (1b) après action de la lame à laquelle il est associé.

14. Machine selon l'une des revendications 6 à 13, **caractérisée en ce que** le dispositif d'embrochement (D) comprend un peigne d'embrochement (52) comportant des tubes d'embrochement (54), coopérant avec un peigne (56) pour assurer l'embrochement de piques d'embrochement (P) contenues unitairement dans les tubes (54) de telle façon que durant l'embrochement, l'extrémité avant des piques d'embrochement (P) soit légèrement débordante à l'extrémité avant des tubes (54).

15. Machine selon la revendication 14, **caractérisée en ce que** le peigne d'embrochement (52) fait partie d'un ensemble (51) reproduit en quatre exemplaires à 90° les uns des autres sur la périphérie d'un barillet (50).

16. Machine selon la revendication 15, **caractérisée en ce qu'**au barillet (50), est associé un dispositif de chargement en piques d'embrochement (65-67) pour assurer le chargement des tubes (54) des peignes (52) des ensembles (51) lorsqu'ils sont en position horizontale basse.

17. Machine selon l'une des revendications 6 à 16, **caractérisée en ce que** l'ensemble de coupe (E) comprend, porté sur un cadre rectangulaire (70) disposé transversalement au-dessus du carrousel (B), un arbre de coupe rotatif (71) portant une pluralité de disques de coupe (72) destinés à opérer dans le plan vertical des rainures (23) du plateau (2) présent au poste de coupe, l'arbre (71) étant entraîné simultanément en rotation et en translation le long du cadre (70) durant la coupe.

## Claims

1. Process for production of food product(s) on the skewer, **characterised by** the fact that it comprises the stages of forming a vein (V) of product(s) to be skewered of pre-determined square or rectangular section, of performing separating cuts into slices of the said vein, of skewering the said slices and performing cuts of each slice between the passages of the skewers (P), the operations of skewering and cutting being able to follow each other in different manners.

2. Process as described in claim 1, **characterised by** the fact that the said vein (V) is firstly cut into slices which are then skewered, and then lastly cut up into individual skewered food products.

3. Process as described in claim 1 or 2, **characterised by** the fact that the vein (V) of product(s) to be skewered is formed by filling a channel (1) of rectangular or square section, at least the bottom of which is formed by a conveyer belt (10).

4. Process as described in claim 3, **characterised by** the fact that the formation of the vein (V) in the said channel (1) consists of stacking products in the form of layers along the said channel (1).

5. Machine for implementation of the process as described in one of claims 1 to 4, **characterised by** the fact that it comprises, associated with skewering and cutting means, means for forming a vein (V) of product(s) to be skewered.

6. Machine as describe in claim 5, **characterised by** the fact that it comprises:
- an upstream assembly (A) for forming a vein (V) of measured size of product(s) to be skewered;
- a carousel of trays (B), the trays (2) of which pass one after the other before the outlet of the assembly (A) to receive the issuing end of the vein (V);
- a slicing assembly (C) for separating from the vein (V) the issuing end of this received in a tray (2) and forming its contents;
- a skewering assembly (D) downstream of the assembly (A) on a same side of the carousel (B), intended to skewer in a single row the contents of the loaded trays (2); and
- a cutting assembly (E) downstream of the skewering assembly (D), intended to individualise into skewered foodstuffs the contents of the containers skewered at the station (D).

7. Machine as described in claim 6, **characterised by** the fact that the said assembly for forming a vein (V) comprises a channel (1) of square or rectangular cross-section, formed by a bottom conveyer (10) with an endless belt forming a horizontal way bordered by lateral walls (11), which channel (1) is open at the top in its upstream part (1a) and ends downstream in a covered section or tunnel (1b) the outlet of which has transversal and vertical dimensions corresponding exactly to those of the vein (V) to be formed.

8. Machine as described in claim 7, **characterised by** the fact that the upper wall of the tunnel (1b consists of the lower portion (12a) of the endless belt of a conveyer (12), which lower portion (12a) has a slight fall in the downstream direction at least over a certain length from its upstream end, to act in vertical compression on the vein (V).

9. Machine as described in one of claims 6 to 8, **characterised by** the fact that the carousel of trays (B) comprises a plurality of trays (2) mounted on an endless chain (15), of which the out-running portion (15a) runs in immediate proximity before the outlet of the tunnel (1b) of the assembly (A), the trays (2) being fixed to the chain (15) by means of a hinge (25), in such a manner that, by means of fixed slide guides, they can occupy various sloping positions between the vertical and the horizontal, which depend on their position in the carousel (B) .

10. Machine as described in one of claims 6 to 9, **characterised by** the fact that the trays (2) comprise a rectangular base (20) open at the back, two lateral rims (21) and a frontal rim (22), the upper face (20a) of the base having from front to back a plurality of parallel and equidistant grooves (23), intended for the passage of cutting discs (72), which are open at their two ends, extending at the front in the frontal rim (22), the latter having on each side of the slots (23), notches (24), the bottoms of which form the passages for the skewers (P).

11. Machine as described in claim 10, **characterised by** the fact that several models of tray (2) are provided for the production of different formats of skewered foodstuff, the models varying in their depth but being so designed that the bottoms of the notches (24) in the frontal rim (22) are equally spaced for all models from the lower face (20b) of the bottom wall (20) and that, similarly, the bottoms of the grooves (23) are equally spaced for all models from the lower face (20b) of the bottom wall (20).

12. Machine as described in one of claims 6 to 11, **characterised by** the fact that the slicing assembly (C) comprises an assembly of two blades (36a, 36b) oppositely mounted and acting in turn by simultaneous displacements in rotation and backwards and forwards on themselves.

13. Machine as described in claim 12, **characterised by** the fact that in the slicing assembly (C), with each blade (36a, 36b) is associated a screen (37a, 37b respectively) the function of which is to temporarily close the outlet of the tunnel (1b after action of the blade with which it is associated.

14. Machine as described in one of claims 6 to 13, **characterised by** the fact that the skewering device (D) comprises a skewering comb (52) including skewering tubes (54), co-operating with a comb (56) to provide skewering of skewering spikes (P) contained unitarily in the tubes (54) in such a manner that, during skewering, the front ends of the skewering spikes (P) protrude slightly at the front ends of the tubes (54).

15. Machine as described in claim 14, **characterised by** the fact that the skewering comb (52) forms part of an assembly (51) reproduced in four versions at 90° to each other around the periphery of a drum (50).

16. Machine as described in claim 15, **characterised by** the fact that with the drum (50) is associated a skewering spike loading device (65 - 67) to load the tubes (54) of the combs (52) of the assemblies (51) when they are in the low horizontal position.

17. Machine as described in one of claims 6 to 16, **characterised by** the fact that the cutting assembly (E) comprises, carried on a rectangular frame (70) arranged transversally above the carousel (B), a rotary cutting shaft (71) carrying a plurality of cutting discs (72) intended to operate in the vertical plane of the grooves (23) of the tray (2) present at the cutting station, the shaft (71) being driven simultaneously in rotation and in translation along the frame (70) during cutting.

## Patentansprüche

1. Verfahren zur Herstellung von Spießen für Nahrungsmittel, **dadurch gekennzeichnet, dass** es Schritte umfasst, die im Herstellen eines Strangs (V) aufzuspießender Produkte, der einen vorbestimmten quadratischen oder rechtwinkligen Querschnitt hat, im Zerschneiden des Strangs in Portionen, im Aufspießen der geschnittenen Portionen und im Durchschneiden jeder Portion zwischen dem Durchführen der Spieße besteht, wobei Aufspießen und Schneiden einander in unterschiedlicher Weise folgen können.

2. Verfahren nach Anspruch 1, **dadurch gekennzeichnet, dass** der Strang (V) zunächst in Portionen geschnitten wird, die dann aufgespießt und schließlich in einzelne Spieße zerschnitten werden.

3. Verfahren nach Anspruch 1 oder 2, **dadurch gekennzeichnet, dass** der Strang (V) aufzuspießender Produkte durch Befüllung eines Kanals (1) mit rechtwinkligem oder quadratischem Querschnitt erhalten wird, bei dem zumindest der Boden aus einem Förderband (10) besteht.

4. Verfahren nach Anspruch 3, **dadurch gekennzeichnet, dass** die Bildung des Strangs (V) in dem Kanal (1) in einer Stapelung von Produkten in Form von Schichten entlang dem Kanal (1) besteht.

5. Maschine zur Anwendung des Verfahrens nach einem der Ansprüche 1 bis 4, **dadurch gekennzeichnet, dass** sie, verbunden mit Mitteln zum Aufspießen und zum Schneiden, Mittel zur Herstellung eines Strangs (V) aufzuspießender Produkte umfasst.

6. Maschine nach Anspruch 5, **dadurch gekennzeichnet, dass** sie umfasst:
- einen vorgeschalteten Teil (A) zur Herstellung eines Strangs (V) aufzuspießender Teile umfasst, der einen genau abgemessenen Querschnitt aufweist;
- eine Umlaufanlage (B) mit Platten, deren Platten (2) nacheinander an dem Ausgang der Einheit (A) vorbeiziehen, um das austretende Ende des Strangs (V) aufzunehmen;
- eine Schneideinheit (C) zum Abtrennen des austretenden Endes des Strangs (V), das von einer Platte (2) aufgenommen wird und dessen Inhalt bildet;
- eine Aufspießeinheit (D), die der Einheit (A) auf der gleichen Seite der Umlaufanlage (B) nachgeschaltet und dazu vorgesehen ist, den Inhalt der beladenen Platten (2) in einer einzigen Reihe aufzuspießen; und
- eine Vorrichtung zum Zerschneiden (E), die der Aufspießeinheit (D) nachgeschaltet vorgesehen ist und den Inhalt der in Station (D) aufgespießten Behälter in einzelne Spieße zerschneiden soll.

7. Maschine nach Anspruch 6, **dadurch gekennzeichnet, dass** die Einheit zur Herstellung eines Strangs (V) einen Kanal (1) mit quadratischem oder rechteckigem Querschnitt umfasst, der aus einem Basis-Endlosbandförderer (10) besteht, der eine horizontale Bahn bildet, die von Seitenwänden (11) eingefasst ist, welcher Kanal (1) in seinem vorderen Teil (1a) oben offen ist und hinten mit einem bedeckten Stück oder Tunnel (1b) abschließt, dessen Ausgang Vertikal- und Querabmessungen hat, die genau denen des herzustellenden Strangs (V) entspricht.

8. Maschine nach Anspruch 7, **dadurch gekennzeichnet, dass** die obere Wand des Tunnels (1b) im unteren Trum (12a) des Endlosbandförderers einer Fördereinrichtung (12) besteht, welches untere Trum (12a) zumindest auf einer bestimmten Länge leicht von seinem vorderen Ende nach hinten geneigt ist, um den Strang (V) vertikal zu komprimieren.

9. Maschine nach einem der Ansprüche 6 bis 8, **dadurch gekennzeichnet, dass** die Plattenumlaufanlage (B) eine Vielzahl von Platten (2) umfasst, die auf eine Endloskette (15) montiert sind, deren Vorlauftrum (15a) in unmittelbarer Nähe vor dem Ausgang des Tunnels (1b) der Einheit (A) vorbeizieht, wobei die Platten (2) an der Kette (15) mittels eines Gelenks (25) montiert sind, in der Weise, dass sie mit Hilfe fester Gleitführungsmittel unterschiedliche Neigungspositionen zwischen der Vertikalen und der Horizontalen einnehmen können, die von ihrer Position in der Umlaufanlage (B) abhängen.

10. Maschine nach einem der Ansprüche 6 bis 9, **dadurch gekennzeichnet, dass** die Platten (2) einen hinten offenen, rechteckigen Boden (20), zwei seitliche Randleisten (21) und eine stirnseitige Randleiste (22) aufweisen, wobei die Oberseite (20a) des Bodens von vorne nach hinten eine Mehrzahl paralleler und gleich beabstandeter Rillen (23) aufweist, die für die Durchführung von Schneidscheiben (72) vorgesehen sind, die an deren beiden Enden münden und nach vorne in der stirnseitigen Randleiste (22) verlängert sind, die beidseitig der Schlitze (23) Einkerbungen (24) aufweist, deren Boden die Durchführung für Spieße (P) bildet.

11. Maschine nach Anspruch 10, **dadurch gekennzeichnet, dass** mehrere Modelle von Platten (2) im Hinblick auf die Herstellung unterschiedlicher Größen von Spießen vorgesehen sind, wobei die Modelle in der Tiefe variieren, jedoch so vorgesehen sind, dass der Boden der Einkerbungen (24) in der stirnseitigen Randleiste (22) bei allen Modellen von der Unterseite (20b) der Bodenwand (20) in gleichem Abstand entfernt ist und dass der Boden der Rillen (23) auch bei allen Modellen in gleichem Abstand von der Unterseite (20b) der Bodenwand (20) entfernt ist.

12. Maschine nach einem der Ansprüche 6 bis 11, **dadurch gekennzeichnet, dass** die Schneideinheit (C) eine Einheit aus zwei Klingen (36a, 36b) ist, die einander gegenüber montiert sind und durch gleichzeitige Dreh- und Hin- und Herbewegungen um sich selbst abwechselnd zum Einsatz kommen.

13. Maschine nach Anspruch 12, **dadurch gekennzeichnet, dass** bei der Schneideinheit (C) zu jeder Klinge (36a, 36b) eine Wand (37a bzw. 37b) gehört, deren Aufgabe es ist, den Ausgang des Tunnels (1b) nach dem Einsatz der Klinge, zu der sie gehört, vorübergehend zu verschließen.

14. Maschine nach einem der Ansprüche 6 bis 13, **dadurch gekennzeichnet, dass** die Aufspießvorrichtung (D) einen Aufspießrechen (52) mit Aufspießröhren (54) umfasst, der mit einem Rechen (56) zusammenwirkt, um das Aufspießen von Spießen (P) sicherzustellen, die einzeln in den Röhren (54) enthalten sind, sodass während des Aufspießens das vordere Ende der Spieße (P) leicht über das Vorderende der Röhren (54) übersteht.

15. Maschine nach Anspruch 14, **dadurch gekennzeichnet, dass** der Aufspießrechen (52) Teil einer Einheit (51) ist, die in im 90°-Winkel voneinander angeordneten Exemplaren vierfach am Umfang eines Magazins (50) vorgesehen sind.

16. Maschine nach Anspruch 15, **dadurch gekennzeichnet, dass** zu dem Magazin (50) eine Vorrichtung zum Beladen mit Spießen (65-67) zur Sicherstellung der Beladung der Röhren (54) der Rechen (52) der Einheiten (51) vorgesehen ist, wenn sie in der unteren horizontalen Position sind.

17. Maschine nach einem der Ansprüche 6 bis 16, **dadurch gekennzeichnet, dass** die Schneideinheit (E) eine auf einem quer über der Umlaufanlage (B) angeordneten rechteckigen Rahmen (70) getragene drehbare Schneidwelle (71) umfasst, die eine Mehrzahl von Schneidscheiben (72) trägt, die dazu bestimmt sind, auf der Vertikalebene der Rillen (23) der Platte (2) zu arbeiten, die sich gerade an der Schneidstation befindet, wobei die Welle (71) während des Schneidens gleichzeitig in Drehung und Translation entlang des Rahmens (70) angetrieben wird.
